# EUROPÄISCHE PATENTSCHRIFT

(11) **EP 2 268 414 B1**
(45) Veröffentlichungstag und Bekanntmachung des Hinweises auf die Patenterteilung: **08.02.2012**
(21) Anmeldenummer: 09723648.3
(22) Anmeldetag: 27.03.2009
(51) Int. Cl.: B05B 13/02

(54) **VORRICHTUNG UND VERFAHREN ZUM LACKIEREN EINES LINEARELEMENTS, INSBESONDERE EINES DRAHTES**
DEVICE AND METHOD FOR COATING A LINEAR ELEMENT, IN PARTICULAR A WIRE
DISPOSITIF ET PROCÉDÉ DE LAQUAGE D'UN ÉLÉMENT LINÉAIRE, EN PARTICULIER D'UN FIL

(30) Priorität: 28.03.2008 AT 4902008; 28.03.2008 AT 4892008
(43) Veröffentlichungstag der Anmeldung: 05.01.2011
(73) Patentinhaber: NHKM Consulting GmbH, 3002 Purkersdorf (AT)
(72) Erfinder: PASCHER, Gerald, A-3002 Purkersdorf (AT)
(74) Vertreter: Sonn & Partner Patentanwälte
(86) Internationale Anmeldenummer: PCT/AT2009/000125
(87) Internationale Veröffentlichungsnummer: WO 2009/117757

(56) Entgegenhaltungen:
- US-A- 3 359 096
- US-A- 3 576 664

## Beschreibung

Die Erfindung betrifft eine Vorrichtung zum Lackieren eines Linearelements, insbesondere eines Drahtes, mit einer Auftragsvorrichtung zum Auftragen zumindest einer Lackschicht, einem Ofen zum Verfestigen der Lackschicht und zumindest einer Kühlvorrichtung sowie ein Verfahren zum Lackieren eines Linearelements, insbesondere eines Drahtes, wobei zumindest eine Lackschicht auf dem Linearelement aufgetragen wird, welche auf dem Linearelement mittels Wärmezufuhr verfestigt wird und wobei das Linearelement mit der verfestigten Lackschicht gekühlt wird.

Eine gattungsgemäße Vorrichtung wird in US 3 576 664 gezeigt.

Die Qualität eines mit der eingangs genannten Vorrichtung bzw. dem betreffenden Verfahren hergestellten lackierten Drahtes wird maßgeblich von den Betriebsparametern, wie der Temperatur in dem Ofen, der Drahtgeschwindigkeit, dem Drahtdurchmesser, ebenso wie von der Umgebungstemperatur und der relativen Luftfeuchtigkeit beeinflusst. Insbesondere hat auch die Temperatur in der Kühlvorrichtung wesentlichen Einfluss auf die Prozessführung; die Lackschicht setzt sich üblicherweise aus mehreren Deckungen zusammen, so dass durch die Kühlvorrichtung im Wesentlichen die Temperatur des Drahtes und der bereits aufgebrachten Deckungen bestimmt wird, die der Draht beim Einlaufen in die Auftragsvorrichtung hat. Die Temperatur des Drahtes beim Auftragen einer weiteren Deckung der Lackschicht hat nämlich enormen Einfluss auf die Qualität des fertiggestellten lackierten Drahtes, insbesondere hinsichtlich Einbrenngrad und/oder Oberflächenqualität. Der Einbrenngrad ist in der EN 60851-5 definiert. Unter Einbrenngrad versteht man ein Maß für die Qualität der fertigen Lackisolationsschicht; er ist ein Temperaturwert, der direkt mit dem Aushärtegrad der Lackschicht zusammenhängt.

Demzufolge hat beispielsweise auch die Umgebungstemperatur, welcher das Linearelement zwischen Austritt aus der Kühlvorrichtung und Eintritt in die Auftragsvorrichtung ausgesetzt ist und die bei einem 24 Stunden-Schichtbetrieb während Tag und Nacht beträchtlich schwanken kann, einen massiven Einfluss auf den Einbrenngrad. Aus diesem Grund wird üblicherweise dazu tendiert, "überbrannte" Drähte herzustellen, da der Einbrenngrad einen unteren Grenzwert keinesfalls unterschreiten darf. Sofern ein höherer Einbrenngrad gewählt wird, ist sichergestellt, dass die Qualitätsanforderungen eingehalten werden. Bei bestehenden Vorrichtungen bzw. Verfahren erfolgt die Qualitätssicherung somit auf Kosten des Energieverbrauchs und der Produktionsleistung.

Ziel der vorliegenden Erfindung ist es demzufolge, ein Verfahren bzw. eine Vorrichtung der eingangs angeführten Art zu schaffen, mit welchen hohe Qualitätsanforderungen sichergestellt sind und zugleich der Energieaufwand reduziert wird.

Dies wird erfindungsgemäß dadurch erzielt, dass in Durchzugsrichtung des Linearelements gesehen nach dem Ofen und der Kühlvorrichtung eine Messvorrichtung zum Messen der Temperatur des mit zumindest einer Lackschicht versehenen Linearelements vorgesehen ist. Durch das Erfassen der Temperatur des Linearelements am Ende das Lackiervorgangs, d.h. nachdem das Linearelement aus der Kühlvorrichtung ausgetreten ist und nicht mehr dem Ofen zugeführt wird, ist ein "Überbrennen" der Linearelemente nicht erforderlich; vielmehr kann in Abhängigkeit von der ermittelten Drahttemperatur die Erzielung der vorgegebenen Qualitätsanforderungen sichergestellt werden, da in Abhängigkeit der ermittelten Drahttemperatur unter anderem die Temperatur in der Kühlvorrichtung und/oder in der Ofeneinheit entsprechend eingestellt werden kann.

Vorteilhafterweise ist die Messvorrichtung mit einer Regeleinheit zum Regeln einer Kühlleistung der Kühlvorrichtung und/oder einer Heizleistung in der Ofenvorrichtung in Abhängigkeit der ermittelten Temperatur des Linearelements verbunden. Durch die Regelung der Temperatur in der Kühlvorrichtung und/oder in der Ofeneinheit in Abhängigkeit von der ermittelten Temperatur des Linearelements kann eine energieeffiziente Kühlung bzw. Erwärmung des mit einer Lackschicht versehenen Linearelements vorgesehen werden. Umgebungseinflüsse, wie beispielsweise eine unterschiedliche Umgebungstemperatur, können durch die Regelung in Abhängigkeit von der ermittelten Temperatur des Linearelements automatisch kompensiert werden, so dass ein "Überbrennen" der Linearelemente nicht erforderlich ist, ist doch durch die Regelung in Abhängigkeit von der ermittelten Drahttemperatur die Erzielung der vorgegebenen Qualitätsanforderungen sichergestellt..

Da der Ofen zum Verfestigen bzw. Einbrennen der Lackschicht, d.h. der Lackeinbrennofen, üblicherweise von Seiten des Herstellers auf konstante Betriebsparameter getrimmt ist, um die Möglichkeit einer Fehlbedienung seitens der Produzenten weitgehend zu eliminieren, ist es von Vorteil, wenn zur Sicherstellung des gewünschten Einbrenngrads der Kühlvorrichtung zumindest ein Gebläse mit einem Laufrad zugeordnet ist, wobei die Drehzahl des Laufrads zur Regelung der Kühlleistung der Kühlvorrichtung geregelt ist. Durch die Drehzahlregelung des der Kühlvorrichtung zugeordneten Gebläses kann auf einfache Weise die Kühlleistung geregelt werden, so dass - in Abhängigkeit von der gemessenen Drahttemperatur - genau jene für eine hohe Qualität erforderliche Kühlleistung dem Draht zugeführt wird.

Hinsichtlich einer zuverlässigen, effizienten Kühlung des Linearelements ist es vorteilhaft, wenn die Kühlvorrichtung einen in Durchzugsrichtung des Linearelements gesehen hinter dem Ofen angeordnete Hauptkühler und einen in Durchzugsrichtung hinter einer Umlenkrolle angeordneten Rücklaufkühler mit jeweils einem Durchzugskanal aufweist. In diesem Fall ist es günstig, wenn dem Haupt- und Rücklaufkühler jeweils zumindest ein drehzahlgeregeltes Gebläse zugeordnet ist.

Hinsichtlich einer effizienten Kühlung im Hauptkühler ist es vorteilhaft, wenn dem Hauptkühler im Bereich des Eintritts des Linearelements ein aus dem Durchzugskanal Luft abführendes Gebläse und im Bereich des Austritts ein in den Durchzugskanal Luft zuführendes Gebläse vorgesehen ist.

Hinsichtlich einer einfachen Durchmesser- und Geschwindigkeitsunabhängigen Messung der Temperatur des Linearelements ist es von Vorteil, wenn zum berührungslosen Messen der Temperatur des Linearelements ein auf eine Soll-Temperatur erwärmter Körper mit einem Durchzugskanal für das Linearelement vorgesehen ist, wobei in dem Körper zumindest ein Sensor zum Erfassen eines Wärmestroms zwischen dem Linearelement und dem Körper aufgenommen ist.

Das Verfahren der eingangs angeführten Art ist dadurch gekennzeichnet, dass nach dem Erwärmen und Kühlen des Linearelements die Temperatur des mit Lackschicht versehenen Linearelements gemessen wird. Für das erfindungsgemäße Verfahren ergeben sich die bereits vorstehend in Zusammenhang mit der erfindungsgemäßen Vorrichtung beschriebenen Vorteile, so dass zur Vermeidung von Wiederholungen auf vorstehende Ausführungen verwiesen wird.

Zwecks Automatisierung der Einstellung der Heiz- und/oder Kühlleistung ist es günstig, wenn in Abhängigkeit der gemessenen Temperatur des Linearelements die Kühlung des Linearelements und/oder die Wärmezufuhr geregelt wird.

Wenn Luft, die zur Kühlung des Linearelements verwendet wird, von oder in eine Umgebung außerhalb eines im Wesentlichen geschlossenen Raumes, im welchem das Verfahren durchgeführt wird, angesaugt oder abgeleitet wird, wird die Energieeffizienz des Verfahrens weiter gesteigert. Bei bekannten Verfahren war es bisher üblich, dass die der Kühlvorrichtung zugeführte Zuluft aus dem umgebenden, geschlossenen Raum, d.h. einer Halle, zugeführt wurde; die Abluft wurde jedoch nach außen abgeleitet. Dies hatte zur Folge, dass speziell in kälteren Regionen die Heizkosten der Produktionsstätte erhöht wurden, da kontinuierlich vergleichsweise warme Hallenluft nach außen transportiert wurde.

Wenn zum berührungslosen Messen der Temperatur des Linearelements ein mit einem Durchzugskanal für das Linearelement versehener Körper auf eine Soll-Temperatur erwärmt wird und während des Durchlaufens des Linearelements durch den Durchzugskanal ein Wärmestrom zwischen dem Linearelement und dem Körper gemessen wird, kann wiederum auf einfache Weise, unabhängig vom Durchmesser bzw. der Geschwindigkeit des Linearelements die Temperatur des Linearelements gemessen werden. Tests haben gezeigt, dass im Gegensatz zu herkömmlichen Wärmesensoren, wie z.B. einer Thermosäule oder dergleichen, eine genaue Temperaturbestimmung des frisch lackierten Drahtes erzielt wird, sofern der Wärmestromsensor hierbei aus einem thermoelektrischen Schichtmaterial besteht, welches vorzugsweise mit einer Kunststoffschicht überzogen ist. Eine derartige Temperatur-Messvorrichtung kann selbstverständlich an jeder beliebigen Stelle - auch unabhängig von der erfindungsgemäßen Vorrichtung - zum Messen der Temperatur eines lackierten Drahtes eingesetzt werden.

Durch das Erwärmen des einen Durchzugskanal für das Linearelement aufweisenden Körpers auf die gewünschte Soll-Temperatur des Linearelements, d.h. insbesondere eines Drahtes, kann auf einfache Weise durch Erfassen des Wärmestroms bzw. Wärmeflusses, der zwischen dem Linearelement und dem beheizten Körper fließt, auf die Temperatur des Linearelements geschlossen werden.

Um den Körper der Vorrichtung auf die gewünschte Soll-Temperatur vorzuerwärmen, ist es günstig, wenn in dem Körper zumindest ein Heizelement, insbesondere zwei stabförmige Heizelemente; aufgenommen ist bzw. sind.

Hinsichtlich einer Soll-Wert-Temperaturregelung des erwärmten Körpers ist es günstig, wenn in dem Körper zumindest ein Temperatursensor aufgenommen ist. Mit Hilfe der über Temperatursensoren erfassten Temperatur kann zusammen mit einer Regeleinheit auf einfache Weise die gewünschte Soll-Wert-Regelung erzielt werden.

Um den zwischen dem Linearelement und dem auf eine Soll-Temperatur vorgewärmten Körper fließenden Wärmestrom zuverlässig zu erfassen, ist es günstig, wenn der Durchzugskanal zumindest teilweise mit einem Wärmestromsensor, ausgekleidet ist, wobei der Wärmestromsensor hierbei vorzugsweise aus einem thermoelektrischen Schichtmaterial besteht, welches beidseitig mit einer Kunststoffschicht überzogen ist. Derartige Wärmestromsensoren werden beispielsweise von der Firma CAPTEC vertrieben.

Um im Wesentlichen einen geschlossenen Durchzugskanal für das bewegte Linearelement bereitzustellen ist es hinsichtlich einer konstruktiv einfachen Ausgestaltung von Vorteil, wenn der Körper zur Ausbildung des Durchzugskanals eine im Wesentlichen schlitzförmige Öffnung aufweist, die mit einem, vorzugsweise schwenkbar gelagerten, Deckel verschließbar ist.

Erfindungsgemäß ist somit auch ein Verfahren zum berührungslosen Messen der Temperatur eines Linearelements geoffenbart, das dadurch gekennzeichnet ist, dass ein mit einem Durchzugskanal für das Linearelement versehener Körper auf eine Soll-Temperatur erwärmt wird und während des Durchlaufens des Linearelements durch den Durchzugskanal ein Wärmestrom zwischen dem Linearelement und dem Körper gemessen wird. Die mit diesem Verfahren verbundenen Vorteile ergeben sich bereits in Zusammenhang mit der korrespondierenden, zuvor beschriebenen Temperatur-Messvorrichtung, so dass zwecks Vermeidung von Wiederholungen auf vorstehende Ausführungen verwiesen wird.

Um Sicherzustellen, dass der Körper die gewünschte Soll-Temperatur, d.h. die angestrebte Temperatur des durch den Durchzugskanal durchgeführten Linearelements, aufweist, ist es von Vorteil, wenn die Soll-Temperatur des Körpers geregelt wird.

Die Erfindung wird nachstehend anhand eines in den Zeichnungsunterlagen dargestellten bevorzugten Ausführungsbeispiels, auf das sie jedoch nicht beschränkt sein soll, noch näher erläutert. Im Einzelnen zeigen in der Zeichnung:
Fig. 1 eine schematische Darstellung einer Drahtlackiervorrichtung mit einem Einbrennofen sowie einem Hauptdraht- und einem Rücklaufdrahtkühler, denen jeweils zumindest ein drehzahlgeregeltes Gebläse zugeordnet ist;
Fig. 2 schematisch eine Vorrichtung zum Messen der Temperatur des lackierten Drahtes;
Fig. 3 schematisch die Regelvorrichtung der den Drahtkühlern zugeordneten Gebläse;
Fig. 4 eine Seitenansicht einer Vorrichtung zum Messen der Temperatur des lackierten Drahtes;
Fig. 5 eine Draufsicht der Vorrichtung gemäß Fig. 4;
Fig. 6 einen Schnitt gemäß der Linie VI-VI in Fig. 5;
Fig. 7 einen Schnitt gemäß der Linie VII-VII in Fig. 4;
Fig. 8 einen Schnitt gemäß der Linie VIII-VIII in Fig. 5; und
Fig. 9 eine perspektivische Ansicht der Vorrichtung gemäß den Fig. 4 bis 8.

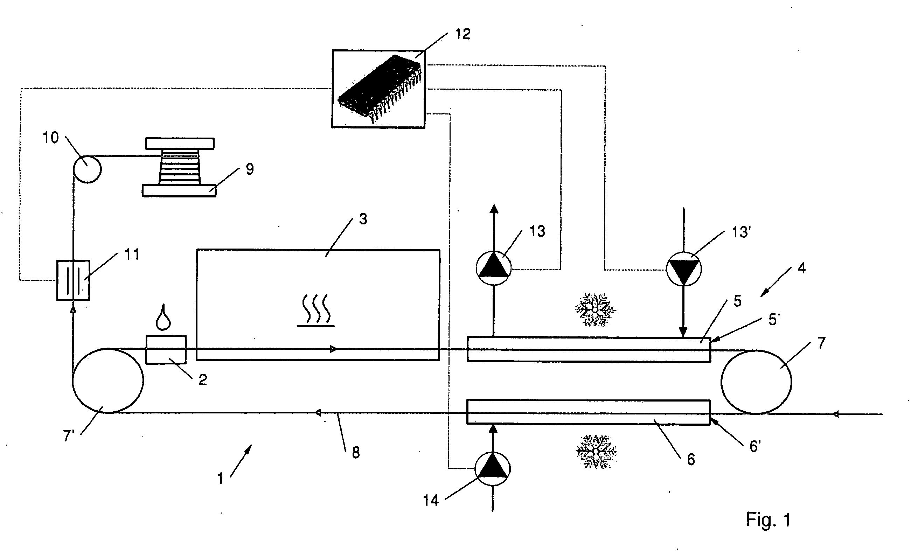

In Fig. 1 ist eine Vorrichtung 1 gezeigt, welche eine Lackauftragsvorrichtung 2, einen Lackeinbrennofen 3 sowie eine Kühlvorrichtung 4, welche sich aus einem Hauptdrahtkühler 5 und einem Rücklaufdrahtkühler 6 zusammensetzt, aufweist. Zwischen dem Hauptdrahtkühler 5 und dem Rücklaufdrahtkühler 6 ist eine Umlenkrolle 7 vorgesehen, über welche der bereits eine oder mehrere Deckungen einer Lackschicht aufweisende (Kupfer-)Draht 8 in Richtung des Rücklaufdrahtkühlers 6 umgelenkt wird und über eine weitere Umlenkrolle 7' wiederum der Lackauftragvorrichtung 2 zugeführt wird. Der Draht wird im Kreis geführt, solange bis die gewünschte Anzahl an Deckungen zur Fertigstellung der Lackschicht vorhanden ist.

Wenn die gewünschte Anzahl an Deckungen auf den Draht 8 aufgebracht wurde, wird dieser zu einer Aufwickelmaschine 9 über eine weitere Umlenkrolle 10 geführt, wobei zwischen der Kühlvorrichtung 4 und der Aufwickelmaschine 9, d.h. insbesondere zwischen der Umlenkrolle 7' und der Umlenkrolle 10, eine Messvorrichtung 11 zum berührungslosen Messen der Temperatur des lackierten Drahtes 8 vorgesehen ist.

Die Messvorrichtung 11 ist mit einer Regelungsvorrichtung 12 verbunden, über welche in Abhängigkeit von der gemessenen Temperatur des Drahtes 8 die Drehzahl von Gebläsen 13, 13' des Hauptdrahtkühlers 5 und eines Gebläses 14 des Rücklaufdrahtkühlers 6 geregelt wird.

Hierbei kann die dem Hauptdrahtkühler 5 bzw. Rücklaufdrahtkühler 6 zugeführte Zuluft und die vom Hauptdrahtkühler 5 abgeführte Abluft nicht von der Produktionshalle, in welcher die Vorrichtung aufgestellt wird, zu- bzw. abgeleitet, sondern von der Umgebung außerhalb der Produktionshalle zu- bzw. abgeführt werden, um nicht der Produktionshalle ständig aufgeheizte Hallenluft zu entziehen; selbstverständlich kann die Zuluft jedoch auch aus der Produktionshalle zugeführt werden. Durch die Regelung der Drehzahl der Gebläse 13, 13', 14 des Haupt- und Rücklaufdrahtkühlers 5, 6 kann die Kühlleistung in Abhängigkeit von der gemessenen Drahttemperatur optimal geregelt werden. Bei vorbekannten Vorrichtungenhingegen wurde, insbesondere um Schwankungen der Temperaturen zwischen Tag und Nacht auszugleichen, üblicherweise eine erhöhte Kühlleistung zugeführt, um die gewünschte Qualität sicherzustellen; in weiterer Folge mussten die Drähte daher verhältnismäßig stark erwärmt werden, so dass der Energieverbrauch aufgrund der überhöhten Kühl- und Heizleistung wesentlich höher als erforderlich war. Durch die vorgesehene Regelung kann der Energieverbrauch somit gesenkt werden.

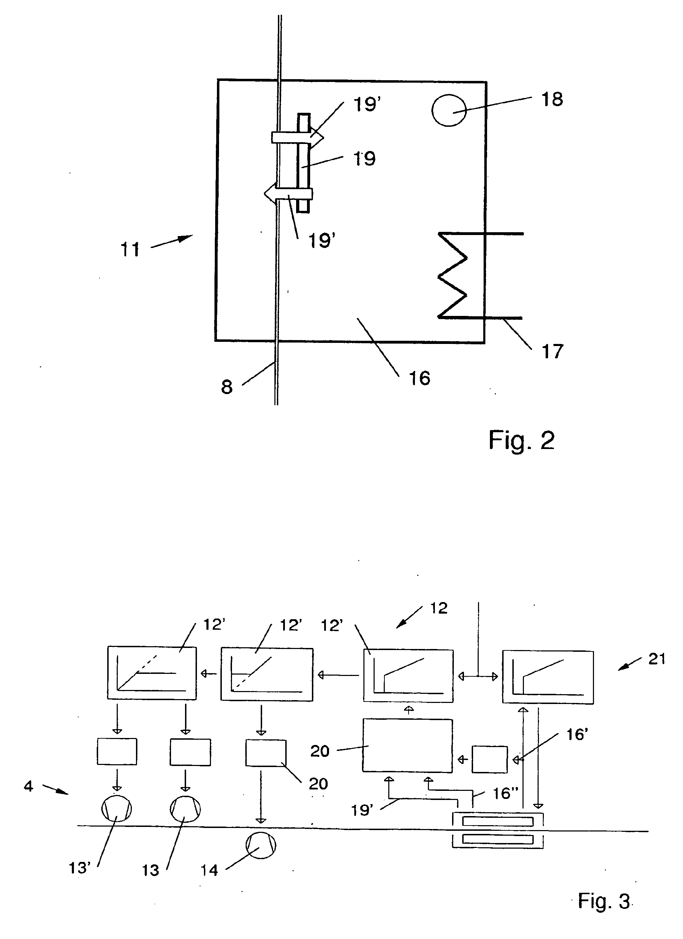

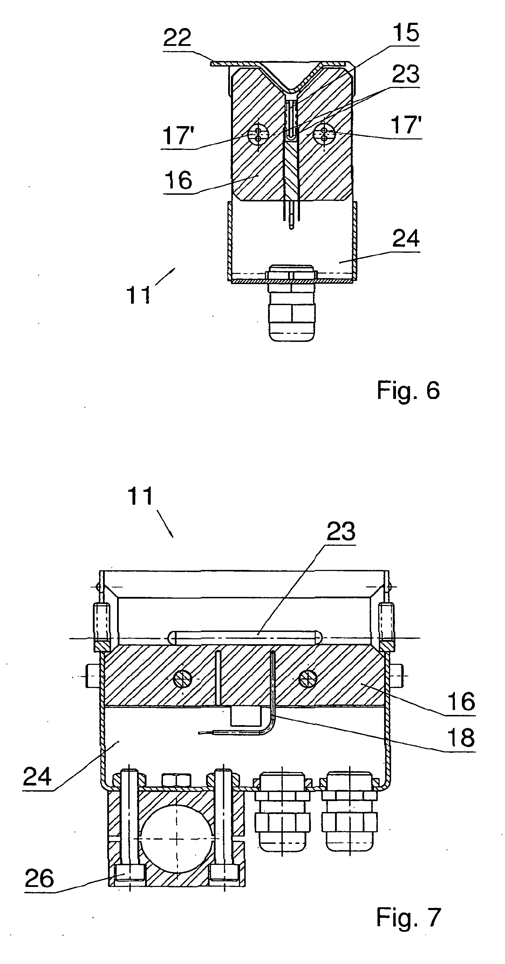

In Fig. 2 ist schematisch das Grundprinzip der Temperatur-Messvorrichtung 11 gezeigt. Hierbei ist ersichtlich, dass der Draht 8 durch einen Durchzugskanal 15 (vgl. Fig. 6) in einem Körper 16 gezogen wird, der mit Hilfe eines Heizelements 17 auf eine vorbestimmte Soll-Temperatur vorgewärmt ist. Zur Temperaturregelung der Körpertemperatur ist in dem Körper 16 zudem ein Temperatursensor 18 aufgenommen, über welchen das Heizelement 17 geregelt wird.

Ferner ist in der Nähe des Durchzugskanals 15 ein Wärmestromsensor 19 vorgesehen, über welchen erfasst wird, ob die Drahttemperatur der vorbestimmten gewünschten Soll-Temperatur des Körpers 16 entspricht oder jedoch ein positiver bzw. negativer Wärmestrom 19' zwischen dem Draht 8 und dem erwärmten Körper 16 fließt. Durch den erfassten Wärmefluss bzw. Wärmestrom 19' kann somit auf einfache und berührungslose Weise die Temperatur des frisch lackierten Drahtes 8 erfasst werden.

Wie insbesondere in Fig. 3 ersichtlich wird der vom Wärmestromsensor 19 gemessene Wärmestrom 19' der Regelungsvorrichtung 12 zugeführt, die einzelne Regler 12' zur Drehzahlregelung der Gebläse 13, 13' bzw. 14' aufweist.

Zur Erzielung der vorbestimmten Draht-Soll-Temperatur des Körpers 16 ist eine weitere Regeleinheit 21 vorgesehen, die den Körper 16 der Messvorrichtung 11 mit Hilfe des Heizelements 17 auf das vorbestimmte Temperaturniveau regelt.

Der durch den durch die Messvorrichtung 11 laufenden Draht 8 abgegebene Wärmestrom 19' wird durch den Wärmestromsensor 19 erfasst und die Regelungsvorrichtung 12 über Zwischenschaltung eines Linearisierungs- und Kompensationsblocks 20 zugeführt. Ist der Wärmestrom 19' ungleich 0, so besitzt der Draht 8 eine zu der Messvorrichtung 11 verschiedene Temperatur. Durch die Regeldifferenz werden die Drehzahlen der Gebläse 13, 13', 14 entsprechend geändert, um die Abweichung auszugleichen. Bei einem positiven Wärmestrom 19' liegt somit eine Temperatur des Drahtes 8 vor, die höher ist als die Draht-Soll-Temperatur, welche der Temperatur des Körpers 16 der Messvorrichtung 11 entspricht. Bei einem negativen Wärmestrom 19' hingegen ist die Drahttemperatur niedriger als die Soll-Temperatur. Daraus ergibt sich eine Verringerung bzw. Erhöhung der Drehzahlen der Gebläse 13, 13', 14 bis die Soll-Drahttemperatur erreicht und/oder konstant gehalten wird.

Um etwaige Umgebungseinflüsse bzw. eine Erwärmung von Anschlussstellen zu kompensieren, wird die Regelungsvorrichtung 12 (über den Linearisierungs- und Kompensationsblock 20) auch die gemessene Temperatur 16' des Körpers 16 und Temperatur 16" im Bereich der Anschlussstellen der Heizelemente 17 zugeführt.

Die Gebläse 13, 13', 14 können - wie in Fig. 3 ersichtlich - entweder parallel oder in zwei Stufen angesteuert werden; hierbei können zunächst Gebläse 13, 13' bis zur Leitungsobergrenze betrieben werden, wobei erst darauffolgend die Drehzahl des Gebläses 14 gesteigert wird. Unabhängig von dem konkreten Aufbau der Kühlvorrichtung 4, welche in Abhängigkeit von der Drahtdimension variieren kann, wird durch die veränderte Kühlleistung jedenfalls die Drahttemperatur geändert, welche wiederum durch die Messvorrichtung 11 erfasst wird, wodurch der Regelkreis geschlossen ist.

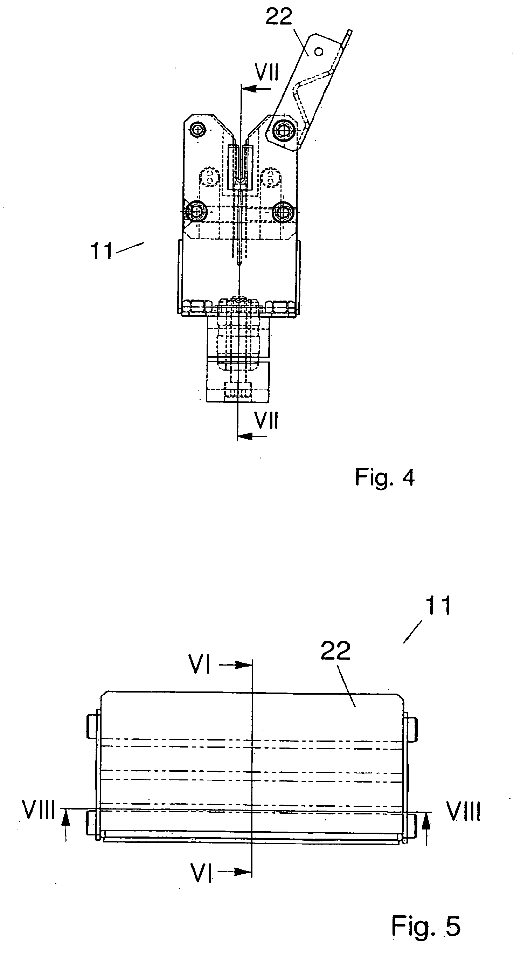

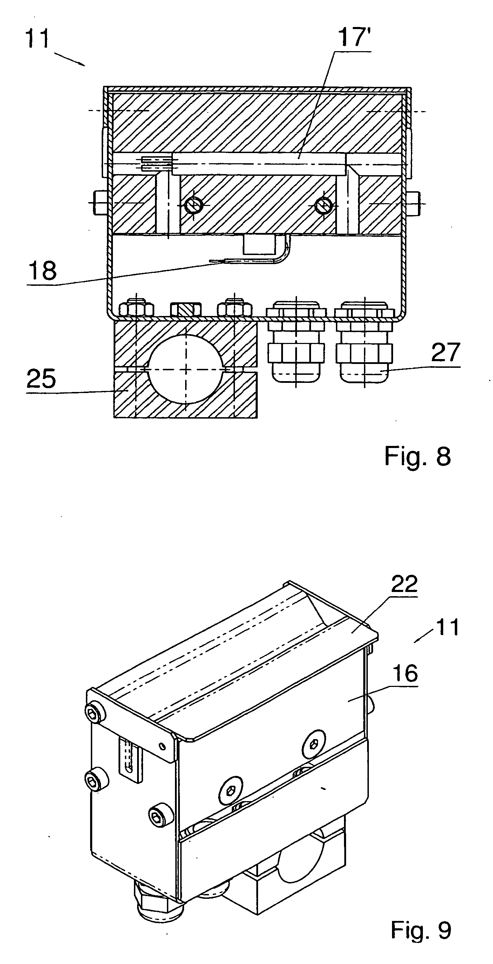

In den Fig. 4 bis 9 ist der bevorzugte Aufbau einer Messvorrichtung 11 im Detail gezeigt. Hierbei ist ersichtlich, dass die Messvorrichtung 11 einen vorzugsweise aus Aluminium bestehenden Körper 16 aufweist, der zur Ausbildung des Durchzugskanals 15 einen Längsschlitz aufweist. Zur Ausbildung des umfangseitig geschlossenen Durchzugskanals 15 ist auf dem Körper 16 ein Deckel 22 schwenkbar gelagert, so dass in der geschlossenen Stellung des Deckels 22 ein geschlossener Durchzugskanal 15 für den Draht 8 ausgebildet ist (vgl. insbesondere Fig. 6); selbstverständlich kann jedoch auch ein "offener" Durchzugskanal 15 ohne Deckel 22 vorgesehen sein.

Der Durchzugskanal 15 ist mit zumindest einem Wärmestromsensor 23 versehen, wobei bei dem gezeigten Ausführungsbeispiel als Wärmestromsensormaterial zwei gegenüberliegend angeordnete, plattenförmige Wärmestromsensoren 23 vorgesehen sind. Zur Messung des Wärmeflusses bzw. Wärmestroms 19' kann eine thermoelektrische Schicht vorgesehen sein, die zwischen zwei flexiblen Kunststoffschichten aufgenommen ist. Ein derartiger Wärmestromsensor wird z.B. von der Firma CAPTEC vertrieben.

Um den Körper 16 auf die gewünschte Draht-Soll-Temperatur aufzuwärmen, sind in dem Körper 16 zwei stabförmige Heizpatronen 17' als Heizelement 17 und zudem ein Temperatursensor 18 vorgesehen, über welchen mit Hilfe der Regeleinheit 21 die gewünschte Drahttemperatur eingeregelt wird.

Wie weiters in den Fig. 4 bis 9 ersichtlich schließt an den Grundkörper 16, der im Wesentlichen aus drei Einzelteilen zusammengesetzt ist, ein Gehäuse 24 an, mit welchem eine Schelle 25 verbunden ist, die über zwei Schrauben 26 auf einfache Weise geschlossen werden kann. Zudem sind an dem Gehäuse 24 auch noch Kabelschraubungen 27 zwecks Befestigung von Kabeln vorgesehen.

## Patentansprüche

1. Vorrichtung zum Lackieren eines Linearelements (8), insbesondere eines Drahtes, mit einer Auftragsvorrichtung (2) zum Auftragen zumindest einer Lackschicht, einem Ofen (3) zum Verfestigen der Lackschicht und zumindest einer Kühlvorrichtung (4), **dadurch gekennzeichnet, dass** in Durchzugsrichtung des Linearelements (8) gesehen nach dem Ofen und der Kühlvorrichtung eine Messvorrichtung (11) zum Messen der Temperatur des mit zumindest einer Lackschicht versehenen Linearelements (8) vorgesehen ist.

2. Vorrichtung nach Anspruch 1, **dadurch gekennzeichnet, dass** die Messvorrichtung mit einer Regeleinheit (12) zum Regeln einer Kühlleistung der Kühlvorrichtung (4) und/oder einer Heizleistung in der Ofenvorrichtung (3) in Abhängigkeit der ermittelten Temperatur des Linearelements (8) verbunden ist.

3. Vorrichtung nach Anspruch 1 oder 2, **dadurch gekennzeichnet, dass** der Kühlvorrichtung (4) zumindest ein Gebläse (13, 13'; 14) mit einem Laufrad zugeordnet ist, wobei die Drehzahl des Laufrads zur Regelung der Kühlleistung der Kühlvorrichtung (4) geregelt ist.

4. Vorrichtung nach einem der Ansprüche 1 bis 3, **dadurch gekennzeichnet, dass** die Kühlvorrichtung (4) einen in Durchzugsrichtung des Linearelements (8) gesehen hinter dem Ofen (3) angeordneten Hauptkühler (5) und einen in Durchzugsrichtung hinter einer Umlenkrolle (7) angeordneten Rücklaufkühler (6) mit jeweils einem Durchzugskanal (5', 6') aufweist.

5. Vorrichtung nach Anspruch 4, **dadurch gekennzeichnet, dass** dem Haupt- und Rücklaufkühler (5, 6) jeweils zumindest ein drehzahlgeregeltes Gebläse (13, 13'; 14) zugeordnet ist.

6. Vorrichtung nach Anspruch 5, **dadurch gekennzeichnet, dass** dem Hauptkühler (5) im Bereich des Eintritts des Linearelements (8) ein aus dem Durchzugskanal (5') Luft abführendes Gebläse (13) und im Bereich des Austritts ein in den Durchzugskanal (5') Luft zuführendes Gebläse (13') vorgesehen ist.

7. Vorrichtung nach einem der Ansprüche 1 bis 6, **dadurch gekennzeichnet, dass** zum berührungslosen Messen der Temperatur des Linearelements (8) ein auf eine Soll-Temperatur erwärmter Körper (16) mit einem Durchzugskanal (15) für das Linearelement (8) vorgesehen ist, wobei in dem Körper (16) zumindest ein Sensor (19) zum Erfassen eines Wärmestroms zwischen dem Linearelement (8) und dem Körper (16) aufgenommen ist.

8. Verfahren zum Lackieren eines Linearelements (8), insbesondere eines Drahtes, wobei zumindest eine Lackschicht auf dem Linearelement (8) aufgetragen wird, welche auf dem Linearelement (8) mittels Wärmezufuhr verfestigt wird und wobei das Linearelement (8) mit der verfestigten Lackschicht gekühlt wird, **dadurch gekennzeichnet, dass** nach dem Erwärmen und Kühlen des Linearelements (8) die Temperatur des mit Lackschicht versehenen Linearelements (8) gemessen wird.

9. Verfahren nach Anspruch 8, **dadurch gekennzeichnet, dass** in Abhängigkeit der gemessenen Temperatur des Linearelements die Kühlung des Linearelements (8) und/oder die Wärmezufuhr geregelt wird.

10. Verfahren nach Anspruch 8 oder 9, **dadurch gekennzeichnet, dass** Luft, die zur Kühlung des Linearelements (8) verwendet wird, von oder in eine Umgebung außerhalb eines im Wesentlichen geschlossenen Raumes, in welchem das Verfahren durchgeführt wird, angesaugt oder abgeleitet wird.

11. Verfahren nach einem der Ansprüche 8 bis 10, **dadurch gekennzeichnet, dass** zum berührungslosen Messen der Temperatur des Linearelements (8) ein mit einem Durchzugskanal (15) für das Linearelement (8) versehener Körper (16) auf eine Soll-Temperatur erwärmt wird und während des Durchlaufens des Linearelements (8) durch den Durchzugskanal (15) ein Wärmestrom zwischen dem Linearelement (8) und dem Körper (16) gemessen wird.

## Claims

1. A device for coating a linear element (8), in particular a wire, with an application device (2) for applying at least one coating layer, an oven (3) for making the coating layer set and at least one cooling device (4), **characterized in that** as seen in the direction in which the linear element (8) is drawn through, downstream of the oven and the cooling device, a measuring device (11) is provided for measuring the temperature of the linear element (8) which is provided with at least one coating layer.

2. The device according to Claim 1, **characterized in that** the measuring device is connected with a regulating unit (12) for regulating a cooling capacity of the cooling device (4) and/or a heating capacity in the oven device (3) as a function of the determined temperature of the linear element (8).

3. The device according to Claim 1 or 2, **characterized in that** associated with the cooling device (4) is at least one fan (13, 13'; 14) with a rotor, wherein the rotation speed of the rotor is regulated for regulating the cooling capacity of the cooling device (4).

4. The device according to one of Claims 1 to 3, **characterized in that** as seen in the direction in which the linear element (8) is drawn through, the cooling device (4) has a main cooler (5) arranged behind the oven (3) and a return cooler (6) arranged behind a deflection roller (7) as seen in the drawing-through direction, with respectively a drawing-through duct (5', 6').

5. The device according to Claim 4, **characterized in that** associated with the main and return cooler (5, 6) there is respectively at least one fan (13, 13'; 14) which is regulated with regard to rotation speed.

6. The device according to Claim 5, **characterized in that** with respect to the main cooler (5) in the region of the entry of the linear element (8) a fan (13) is provided removing air form the drawing-through duct (5') and in the region of the outlet a fan (13') is provided supplying air into the drawing-through duct (5').

7. The device according to one of Claims 1 to 6, **characterized in that** for the contactless measuring of the temperature of the linear element (8), a body (16), heated to a set-point temperature, is provided with a drawing-through duct (15) for the linear element (8), wherein in the body (16) at least one sensor (19) is held for detecting a heat flow between the linear element (8) and the body (16).

8. A method for coating a linear element (8), in particular a wire, wherein at least one coating layer is applied on the linear element (8), which is made to set on the linear element (8) by means of the supply of heat and wherein the linear element (8) with the set coating layer is cooled, **characterized in that** after the heating and cooling of the linear element (8) the temperature of the linear element (8), which is provided with the coating layer, is measured.

9. The method according to Claim 8, **characterized in that** as a function of the measured temperature of the linear element, the cooling of the linear element (8) and/or the heat supply is regulated.

10. The method according to Claim 8 or 9, **characterized in that** air which is used for cooling the linear element (8) is drawn or conveyed from or into an environment outside a substantially closed space, in which the method is carried out.

11. The method according to one of Claims 8 to 10, **characterized in that** for the contactless measuring of the temperature of the linear element (8), a body (16), provided with a drawing-through duct (15) for the linear element (8), is heated to a set-point temperature and during the running through of the linear element (8) through the drawing-through duct (15) a heat flow is measured between the linear element (8) and the body (16).

## Revendications

1. Dispositif de laquage d'un élément linéaire (8), en particulier d'un fil métallique, comportant un dispositif d'application (2) pour appliquer au moins une couche de laque, un four (3) pour durcir la couche de laque et au moins un dispositif de refroidissement (4), **caractérisé en ce qu'**un dispositif de mesure (11), destiné à mesurer la température de l'élément linéaire (8) doté d'au moins une couche de laque dans la direction de passage de l'élément linéaire (8), est prévu après le four et le dispositif de refroidissement.

2. Dispositif selon la revendication 1, **caractérisé en ce que** le dispositif de mesure est relié à une unité de régulation (12) pour réguler une puissance de refroidissement du dispositif de refroidissement (4) et/ou une puissance de chauffage dans le dispositif formant four (3) en fonction de la température déterminée de l'élément linéaire (8).

3. Dispositif selon la revendication 1 ou 2, **caractérisé en ce qu'**au moins une soufflerie (13, 13'; 14) dotée d'un rotor est associée au dispositif de refroidissement (4), la vitesse de rotation du rotor étant régulée afin de réguler la puissance de refroidissement du dispositif de refroidissement (4).

4. Dispositif selon l'une quelconque des revendications 1 à 3, **caractérisé en ce que** le dispositif de refroidissement (4) comporte un refroidisseur principal (5) disposé après le four (3) dans la direction de passage de l'élément linéaire (8), et un refroidisseur de retour (6) disposé après une poulie de déviation (7) dans la direction de passage, chacun de ces refroidisseurs étant doté d'un canal de passage (5', 6').

5. Dispositif selon la revendication 4, **caractérisé en ce qu'**au moins une soufflerie (13, 13'; 14) à vitesse de rotation régulée est respectivement associée au refroidisseur principal (5) et au refroidisseur de retour (6).

6. Dispositif selon la revendication 5, **caractérisé en ce qu'**une soufflerie (13) évacuant de l'air du canal de passage (5') est associée au refroidisseur principal (5) dans la région de l'entrée de l'élément linéaire (8), et une soufflerie (13') apportant de l'air dans le canal de passage (5') est associée au refroidisseur principal (5) dans la région de la sortie.

7. Dispositif selon l'une quelconque des revendications 1 à 6, **caractérisé en ce qu'**un corps (16) chauffé à une température de consigne et doté d'un canal de passage (15) pour l'élément linéaire (8) est prévu pour la mesure sans contact de la température de l'élément linéaire (8), au moins un capteur (19) étant logé dans le corps (16) pour enregistrer un flux de chaleur entre l'élément linéaire (8) et le corps (16).

8. Procédé de laquage d'un élément linéaire (8), en particulier d'un fil métallique, au moins une couche de laque étant appliquée sur l'élément linéaire (8) et étant durcie sur l'élément linéaire (8) par apport de chaleur, et l'élément linéaire (8) doté de la couche de laque durcie étant refroidi, **caractérisé en ce que**, après le chauffage et le refroidissement de l'élément linéaire (8), on mesure la température de l'élément linéaire (8) doté de la couche de laque.

9. Procédé selon la revendication 8, **caractérisé en ce qu'**on régule le refroidissement de l'élément linéaire (8) et/ou l'apport de chaleur en fonction de la température mesurée de l'élément linéaire.

10. Procédé selon la revendication 8 ou 9, **caractérisé en ce que** l'air qui est utilisé pour refroidir l'élément linéaire (8) est respectivement aspiré ou évacué dans un environnement situé à l'extérieur d'un espace sensiblement fermé dans lequel est exécuté le procédé.

11. Procédé selon l'une quelconque des revendications 8 à 10, **caractérisé en ce que**, pour la mesure sans contact de la température de l'élément linéaire (8), on chauffe à une température de consigne un corps (16) doté d'un canal de passage (15) pour l'élément linéaire (8), et on mesure un flux de chaleur entre l'élément linéaire (8) et le corps (16) pendant le passage de l'élément linéaire (8) dans le canal de passage (15).
